# EUROPÄISCHE PATENTSCHRIFT

(11) **EP 3 160 797 B1**
(45) Veröffentlichungstag und Bekanntmachung des Hinweises auf die Patenterteilung: **21.08.2019**
(21) Anmeldenummer: 15721573.2
(22) Anmeldetag: 29.04.2015
(51) Int. Cl.: F21S 41/663, B60Q 1/14

(54) **SCHEINWERFERVORRICHTUNG FÜR EIN KRAFTFAHRZEUG UND KRAFTFAHRZEUG**
HEADLAMP DEVICE FOR A MOTOR VEHICLE AND MOTOR VEHICLE
PHARE POUR VÉHICULE AUTOMOBILE ET VÉHICULE AUTOMOBILE

(30) Priorität: 27.06.2014 DE 102014009592
(43) Veröffentlichungstag der Anmeldung: 03.05.2017
(73) Patentinhaber: Audi AG, 85045 Ingolstadt (DE)
(72) Erfinder: KAUP, Markus, 74906 Bad Rappenau (DE); HAMM, Michael, 72800 Eningen (DE)
(74) Vertreter: Thielmann, Frank
(86) Internationale Anmeldenummer: PCT/EP2015/000875
(87) Internationale Veröffentlichungsnummer: WO 2015/197147

(56) Entgegenhaltungen:
- EP-A2- 2 518 397
- EP-A2- 2 690 351
- DE-A1-102007 063 183
- DE-A1-102008 036 193
- DE-A1-102011 077 132
- JP-A- 2011 249 183
- US-A1- 2013 169 154

## Beschreibung

Die Erfindung betrifft eine Scheinwerfervorrichtung für ein Kraftfahrzeug mit einer Matrixscheinwerfereinheit, welche dazu ausgelegt ist, in unterschiedliche Raumsegmente eines Umgebungsbereichs des Kraftfahrzeugs jeweils einen Lichtkegel abzustrahlen und in Abhängigkeit von einem Steuersignal jeden der Lichtkegel unabhängig von den anderen Lichtkegeln zwischen einem aktiven Zustand und einem inaktiven Zustand zu wechseln, wobei jeder Lichtkegel entlang einer vorbestimmten Richtung in einer Ebene senkrecht zur Fahrzeuglängsachse eine jeweilige Kegelabmessung aufweist. Durch einen räumlichen Abstand der Lichtkegel weist eine in der Ebene und entlang der Richtung gemessene Beleuchtungsstärke der Matrixscheinwerfereinheit eine unerwünschte Welligkeit beziehungsweise eine Schwankung der Beleuchtungsstärke in der Ebene auf. Die Welligkeit wirkt sich somit auch auf eine Fahrbahnebene parallel zu der Fahrzeuglängsachse z.B. als dunkle Streifen aus. Die Erfindung betrifft außerdem ein Kraftfahrzeug mit mindestens einer Scheinwerfervorrichtung.

Scheinwerfervorrichtungen sind aus dem Stand der Technik bekannt. So beschreibt die DE 10 2011 077 132 A1 ein Lichtmodul eines Kraftfahrzeugs zur Erzeugung einer Grundverteilung einer Fernlichtverteilung, die durch eine Überlagerung der Grundverteilung und einer durch mindestens ein anderes Modul erzeugten Spotverteilung gebildet ist. Ziel ist es, bei dem Lichtmodul die Freiheitsgrade bei der Erzeugung und Variation der Lichtverteilung zu erhöhen und dadurch eine noch bessere, situationsgerechtere Ausleuchtung der Fahrbahn vor dem Fahrzeug zu ermöglichen und die besondere Fernlichtfunktion des Lichtmoduls auch nach außen hin für andere Verkehrsteilnehmer erkennbar zu gestalten. Deshalb wird das Lichtmodul in mehrere separate ansteuerbare Untermodule unterteilt, die mehrere Blocksegmente der Grundverteilung erzeugen, wobei sich die Blocksegmente zu der Grundverteilung ergänzen. Weiterhin ist aus der DE 10 2011 077 636 A1 ein Lichtmodul eines Kraftfahrzeugs zur Erzeugung einer Spotverteilung einer Fernlichtlichtverteilung, die durch eine Überlagerung der Spotverteilung und einer durch ein anderes Modul erzeugten Grundverteilung gebildet ist. Das Lichtmodul ist in mehrere separat ansteuerbare Untermodule unterteilt, die mehrere streifenförmige Segmente der Spotverteilung erzeugen, wobei sich die streifenförmigen Segmente zu der Spotverteilung ergänzen.

Weiterhin sind aus dem Stand der Technik Matrixscheinwerfereinrichtungen bzw. Matrixscheinwerfereinheiten bekannt, welche jeweils unterschiedliche Raumsegmente in einem Umgebungsbereich eines Kraftfahrzeugs mit jeweils unterschiedlichen Lichtkegeln ausleuchten. Üblicherweise sind die Raumsegmente matrixartig angeordnet, und jeder Lichtkegel lässt sich unabhängig von den anderen Lichtkegeln in einen aktiven oder inaktiven Zustand versetzen.

Die JP 2010-132170 A offenbart eine Beleuchtungseinrichtung für ein Kraftfahrzeug. Ein Vorderlicht ist dazu ausgelegt, Beleuchtungsabschnitte horizontal versetzt zu Beleuchtungsabschnitten eines weiteren Vorderlichts anzustrahlen.

Es ist Aufgabe der Erfindung, eine Scheinwerfervorrichtung sowie ein Kraftfahrzeug, bei welcher beziehungsweise bei welchem ein Umgebungsbereich des Kraftfahrzeugs besonders homogen ausgeleuchtet werden kann.

Diese Aufgabe wird erfindungsgemäß durch eine Scheinwerfervorrichtung sowie durch ein Kraftfahrzeug mit den Merkmalen gemäß den jeweiligen unabhängigen Patentansprüchen gelöst.

Die erfindungsgemäße Scheinwerfervorrichtung weist in bekannter weise eine Matrixscheinwerfereinheit auf, welche dazu ausgelegt ist, in unterschiedliche Raumsegmente eines Umgebungsbereichs des Kraftfahrzeugs jeweils einen Lichtkegel abzustrahlen und in Abhängigkeit von einem Steuersignal jeden der Lichtkegel unabhängig von den anderen Lichtkegeln zwischen einem aktiven Zustand und einem inaktiven Zustand zu wechseln, wobei jeder Lichtkegel entlang einer vorbestimmten Richtung in einer Ebene senkrecht zur Fahrzeuglängsachse eine jeweilige Kegelabmessung aufweist. Durch einen räumlichen Abstand der Lichtkegel weist eine in der Ebene und entlang der Richtung gemessene Beleuchtungsstärke einer solchen Matrixscheinwerfereinheit eine unerwünschte Welligkeit auf, d.h. es können vom Fahrer senkrechte, dunkle Streifen in der Lichtverteilung wahrgenommen werden. Die Welligkeit kann größer als 10 Prozent, insbesondere größer als 15 Prozent, insbesondere größer als 20 Prozent sein. Dann ist die Herstellung besonders kostengünstig.

Ein wesentlicher Gedanke der Erfindung ist darin zu sehen, dass die Scheinwerfervorrichtung eine Zusatzscheinwerfereinheit umfasst, welche dazu ausgelegt ist, drei Zusatzlichtkegel mit zumindest einer in derselben Richtung und derselben Ebene wie die Kegelabmessung bemessenen doppelten Kegelabmessung abzustrahlen.

Durch die erfindungsgemäße Scheinwerfervorrichtung wird es möglich, den Umgebungsbereich besonders homogen auszuleuchten. Üblicherweise bilden sich in der beschriebenen Weise zwischen den jeweiligen Raumsegmenten beziehungsweise den jeweiligen Lichtkegeln der Matrixscheinwerfereinheit unerwünschte harte Gradienten. Die harten Gradienten sind also starke Unterschiede bezüglich einer Beleuchtungsstärke des Raumsegments. So liegt beispielsweise eine Grenze des Lichtkegels bei 40 Prozent oder 70 Prozent oder 80 Prozent oder 90 Prozent seiner maximalen Leuchtkraft. Die harten Gradienten treten also insbesondere an den Grenzen von benachbarten Lichtkegeln auf. Die Zusatzscheinwerfereinheit ist nun dazu ausgelegt, die drei Zusatzlichtkegel so abzustrahlen, dass jeder der drei Zusatzlichtkegel zumindest die doppelte Kegelabmessung verglichen mit der Kegelabmessung der Matrixscheinwerfereinheit aufweist. Die zumindest doppelte Kegelabmessung kann somit beispielsweise eine Abmessung von 1,5 Raumsegmenten oder 2 Raumsegmenten oder 4 Raumsegmenten aufweisen. Aufgrund der Zusatzscheinwerfereinheit kann also der harte Gradient unterdrückt werden. Im Gegensatz zum Stand der Technik wird die Zusatzscheinwerfereinheit also eingesetzt, um die harten Gradienten, welche aufgrund der Matrixscheinwerfereinheit entstehen, zu reduzieren beziehungsweise zu kaschieren.

Erfindungsgemäß liegt eine Beleuchtungsstärke der Scheinwerfervorrichtung durch die Kombination der Matrixscheinwerfereinheit und der Zusatzscheinwerfereinheit in jedem der Raumsegmente unter einem jeweils vorbestimmten ersten Grenzwert. Es soll also eine vorbestimmte Beleuchtungsstärke für das jeweilige Raumsegment nicht überschritten werden, um beispielsweise der Straßenverkehrsordnung zu genügen. So ist es vorgesehen, dass trotz der Kombination von der Matrixscheinwerfereinheit und der Zusatzscheinwerfereinheit der erste Grenzwert unterschritten wird für jedes der Raumsegmente beziehungsweise für den durch die Scheinwerfervorrichtung beleuchteten Umgebungsbereich.

Erfindungsgemäß variiert eine Beleuchtungsstärke der Scheinwerfervorrichtung durch die Kombination der Matrixscheinwerfereinheit und der Zusatzscheinwerfereinheit in jedem der von den Zusatzlichtkegeln erfassten Raumsegmente weniger als ein vorbestimmter prozentualer zweiter Grenzwert. Das bedeutet, dass also die Gesamtwelligkeit weniger als dieser Grenzwert beträgt. Es ist also vorgesehen, dass durch die Kombination der Matrixscheinwerfereinheit und der Zusatzscheinwerfereinheit eine vorbestimmte Varianz der Gesamtwelligkeit eingehalten werden kann. So soll die Beleuchtungsstärke für die Raumsegmente, welche von dem Lichtkegel und den Zusatzlichtkegeln beleuchtet werden, inklusive der Übergänge zwischen den Raumsegmenten innerhalb des vorbestimmten prozentualen zweiten Grenzwerts beziehungsweise eines Beleuchtungsstärkeintervalls bleiben. Der harte Gradient in den Übergangsbereichen kann somit ausgeschlossen werden. Ein Gradient der Beleuchtungsstärke wird als harter Gradient bezeichnet, wenn die Beleuchtungsstärke sich innerhalb von wenigen Grad des horizontalen Umgebungsbereichs beziehungsweise der horizontalen Fahrbahnebene, insbesondere 0,1 Grad bis 5 Grad, um mehr als 10 Prozent verändert. Ab einer Veränderung kleiner 10 Prozent beziehungsweise einem Variieren kleiner als 10 Prozent, insbesondere 5 Prozent, kann von dem weichen Gradienten gesprochen werden. Der Vorteil ist nun, dass durch den zweiten Grenzwert der weiche Gradient vorbestimmt werden kann. So kann beispielsweise bei einer Breite des horizontalen Umgebungsbereichs von 0,1 Grad eine Veränderung von 10 Prozent möglich sein, während bei einer Breite von 5 Grad beispielsweise eine Veränderung von 20 Prozent möglich ist.

Die Zusatzscheinwerfereinheit ist dazu ausgelegt, falls zumindest einer der Lichtkegel der Matrixscheinwerfereinheit in dem inaktiven Zustand ist, ebenfalls in einen inaktiven Zustand zu wechseln. Das bedeutet, falls ein Raumsegment, welches durch den Lichtkegel und einen der Zusatzlichtkegel beleuchtet ist, nicht weiter durch den Lichtkegel beleuchtet wird, weil dieser in den inaktiven Zustand gewechselt wird, so wird das Raumsegment ebenfalls nicht mehr durch den in das gleiche Raumsegment abstrahlenden Zusatzlichtkegel beleuchtet, weil dieser dann ebenfalls in den inaktiven Zustand gewechselt wird. Dies hat den Vorteil, dass somit das jeweilige Raumsegment vollständig unbeleuchtet erscheinen kann. Dies ist sinnvoll für den Fall, dass in dem jeweiligen Raumsegment ein anderes Kraftfahrzeug beziehungsweise ein anderer Verkehrsteilnehmer erscheint und durch das abgeblendete beziehungsweise nicht beleuchtete Raumsegment ein Blenden des anderen Verkehrsteilnehmers vermieden werden kann. Es ist also sinnvoll, den Lichtkegel und den in das gleiche Raumsegment abstrahlenden Zusatzlichtkegel gleichzeitig in den inaktiven Zustand zu wechseln. Die Zusatzscheinwerfereinheit kann als zusätzliches Modul beziehungsweise als zusätzliche Lichtquelle in der Scheinwerfervorrichtung angeordnet sein und/oder räumlich von der Matrixscheinwerfereinheit getrennt vorliegen.

Es ist vorgesehen, dass die Zusatzscheinwerfereinheit dazu ausgelegt ist, einen der drei Zusatzlichtkegel zumindest teilweise in die Raumsegmente in einem zentralen Frontalbereich, welcher insbesondere symmetrisch zu der Fahrzeuglängsachse angeordnet ist, abzustrahlen. Der zentrale Frontalbereich befindet sich also in Fahrtrichtung vor dem Kraftfahrzeug und erstreckt sich insbesondere symmetrisch zu der Fahrzeuglängsachse. Der eine der drei Zusatzlichtkegel kann also dadurch so ausgelegt sein, dass eine Fahrbahnseite der Fahrzeuglängsachse genauso ausgeleuchtet wird wie die andere Fahrbahnseite der Fahrzeuglängsachse. Vorteilhaft daran ist, dass der zentrale Frontalbereich üblicherweise besonders häufig und intensiv von einem Fahrer des Kraftfahrzeugs beobachtet wird. Die harten Gradienten in diesem zentralen Frontalbereich können sich also als besonders störend erweisen.

Die Scheinwerfereinheit ist dazu ausgelegt, die zwei übrigen der drei Zusatzlichtkegel zumindest teilweise auf ein am seitlichen Rand der Raumsegmente angeordnetes Raumsegment abzustrahlen. Als die Raumsegmente am seitlichen Rand werden beispielsweise die Raumsegmente betrachtet, welche in der horizontalen Fahrbahnebene betrachtet die letzten beleuchteten Raumsegmente darstellen. Das heißt, nach den letzten beleuchteten Raumsegmenten wird der Umgebungsbereich durch keinen der Lichtkegel der Matrixscheinwerfereinheit beleuchtet. Vorteilhaft ist nun, dass der harte Gradient, welcher sich durch die Lichtkegel an dem seitlichen Rand ergibt, zu einem weichen Gradienten geändert werden kann. Die Beleuchtungsstärke fällt somit langsamer und über einen größeren Winkelbereich an dem seitlichen Rand ab. Dies kann beispielsweise der Fall sein bei einer Situation in der Nacht, wenn Bäume am seitlichen Rand sich in einem kürzeren Abstand zum Kraftfahrzeug befinden, als Objekte auf der Straße, also beispielsweise andere Verkehrsteilnehmer, wie ein entgegenkommendes Kraftfahrzeug. Daher kann das Objekt am seitlichen Rand auch mit geringer Beleuchtungsstärke beleuchtet werden. Bevorzugt ist vorgesehen, dass die Zusatzscheinwerfereinheit dazu ausgelegt ist, mit dem beleuchtungsstärksten Bereich des jeweiligen Zusatzlichtkegels in einen vertikalen Übergangsbereich und/oder einen horizontalen Übergangsbereich zwischen den Lichtkegeln der Matrixscheinwerfereinheit abzustrahlen. Das bedeutet, der jeweilige Zusatzlichtkegel kann so eingestellt beziehungsweise so orientiert sein, dass dieser den harten Gradienten zwischen zwei benachbarten Lichtkegeln reduzieren kann. Und wie schon erwähnt, tritt der harte Gradient besonders deutlich an den vertikalen Übergangsbereichen und den horizontalen Übergangsbereichen zwischen den Lichtkegeln auf. Vorteilhaft ist also nun wieder eine besonders hohe Homogenität des gemeinsam durch die Matrixscheinwerfereinheit und die Zusatzscheinwerfereinheit beleuchteten Umgebungsbereichs.

Weiterhin ist vorgesehen, dass eine Lichtquelle der Zusatzscheinwerfereinheit als eine Halogenlampe und/oder eine Xenonlampe und/oder eine Leuchtdiode und/oder ein Laser ausgebildet ist. Vorteilhaft daran ist, dass eine der Situation angepasste Lichtquelle für die Zusatzscheinwerfereinheit gewählt werden kann. Weiterhin kann die Lichtquelle der Zusatzscheinwerfereinheit mit einer Lichtquelle der Matrixscheinwerfereinheit abgestimmt werden. Es können nun beispielsweise Lichtquellen von der Matrixscheinwerfereinheit und der Zusatzscheinwerfereinheit kombiniert werden, welche sich besonders gut, beispielsweise bezüglich ihres Lichtspektrums, überlagern lassen.

Als weitere Ausführungsform ist vorgesehen, dass eine Beleuchtungsstärke der Scheinwerfervorrichtung durch die Kombination der Matrixscheinwerfereinheit und der Zusatzscheinwerfereinheit in jedem der von dem Zusatzlichtkegel erfassten Raumsegmente weniger als 10 Prozent oder 5 Prozent oder 4 Prozent bis 2 Prozent oder 1 Prozent variiert.

Die Erfindung umfasst auch ein Kraftfahrzeug mit einer erfindungsgemäßen Scheinwerfervorrichtung oder einer vorteilhaften Ausführung davon.

Im Folgenden ist ein Verfahren zum Betreiben einer erfindungsgemäßen Scheinwerfervorrichtung oder einer vorteilhaften Ausführung davon, welche mehrere Lichtkegel mittels einer Matrixscheinwerfereinheit der Scheinwerfereinrichtung erzeugt, beschrieben.. Es werden Lichtkegel in jeweils unterschiedliche Raumsegmente abgestrahlt, wobei ein wesentlicher Gedanke der Erfindung darin zu sehen ist, dass drei Zusatzlichtkegel mittels einer Zusatzscheinwerfereinheit der Scheinwerfereinrichtung erzeugt werden und dass zwei der drei Zusatzlichtkegel zumindest teilweise auf ein am seitlichen Rand der Raumsegmente angeordnetes Raumsegment abzustrahlen . Es kann dadurch, wie bereits zuvor bei der Scheinwerfervorrichtung beschrieben, ermöglicht werden, einen harten Gradienten zu unterdrücken.

Insbesondere ist vorgesehen, dass die zumindest eine Zusatzscheinwerfereinheit in einen inaktiven Zustand gewechselt wird, falls zumindest einer der Lichtkegel, welcher von dem Zusatzlichtkegel überlappt wird, in einen inaktiven Zustand gewechselt wird. Somit kann bei beispielsweise Gegenverkehr und/oder dem Erscheinen eines anderen Verkehrsteilnehmers gewährleistet werden, dass dieser nicht geblendet beziehungsweise irritiert wird.

Die mit Bezug auf die erfindungsgemäße Scheinwerfervorrichtung vorgestellten bevorzugten Ausführungsformen und deren Vorteile gelten entsprechend für das erfindungsgemäße Kraftfahrzeug sowie für das oben beschriebene Verfahren, wobei für das Verfahren die gegenständlichen Elemente in Form und Anordnung so ausgebildet sind, dass diese durch das Wechselwirken untereinander die Verfahrensschritte ermöglichen.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch auch separierte Merkmalskombinationen aus den erläuterten Ausführungen hervorgehen und erzeugbar sind.

Ausführungsbeispiele der Erfindung werden nachfolgend anhand schematischer Zeichnungen näher erläutert. Dabei zeigen:
- Fig. 1: in schematischer Draufsicht ein Ausführungsbeispiel eines erfindungsgemäßen Kraftfahrzeugs mit einem Ausführungsbeispiel einer erfindungsgemäßen Scheinwerfervorrichtung;
- Fig. 2: in schematischer Darstellung unterschiedliche Raumsegmente eines Umgebungsbereichs des Kraftfahrzeugs, in welche jeweils ein Lichtkegel einer Matrixscheinwerfereinheit abgestrahlt wird;
- Fig. 3: ein Diagramm für die Matrixscheinwerfereinheit, welches die Verteilung der Beleuchtungsstärke über einen Azimutwinkel des Umgebungsbereichs darstellt;
- Fig. 4: in schematischer Darstellung einen Zusatzlichtkegel einer Zusatzscheinwerfereinheit der Scheinwerfervorrichtung;
- Fig. 5: ein Diagramm für die Zusatzscheinwerfereinheit, welches die Beleuchtungsstärke analog zu Fig. 3 darstellt;
- Fig. 6: in schematischer Darstellung eine Kombination beziehungsweise Überlagerung von Lichtkegeln der Matrixscheinwerfereinheit und den Zusatzlichtkegel;
- Fig. 7: ein Diagramm für die Matrixscheinwerfereinheit und die Zusatzscheinwerfereinheit in Kombination, welches die Beleuchtungsstärke analog zu Fig. 3 darstellt;
- Fig. 8: ein Diagramm für die Matrixscheinwerfereinheit bezüglich Raumsegmente, welche an einem seitlichen Rand der Raumsegmente angeordnet sind, wobei die Beleuchtungsstärke gemäß Fig. 3 dargestellt ist;
- Fig. 9: in schematischer Darstellung die Zusatzscheinwerfereinheit, welche jeweils einen Zusatzlichtkegel auf ein am seitlichen Rand der Raumsegmente angeordnetes Raumsegment abstrahlt;
- Fig. 10: ein Diagramm für die Matrixscheinwerfereinheit in Kombination mit der Zusatzscheinwerfereinheit, welches die Beleuchtungsstärke an dem seitlichen Rand der Raumsegmente gemäß Fig. 3 darstellt;
- Fig. 11: in schematischer Darstellung eine Kombination der Matrixscheinwerfereinheit und der Zusatzscheinwerfereinheit;
- Fig. 12: ein Diagramm einer Scheinwerfervorrichtung gemäß Fig. 11 mit Fokus auf den seitlichen Rand; und
- Fig. 13: in schematischer Darstellung eine erfindungsgemäße Scheinwerfervorrichtung mit einer Matrixscheinwerfereinheit und einer Zusatzscheinwerfereinheit, wobei drei Zusatzlichtkegel abgestrahlt werden.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

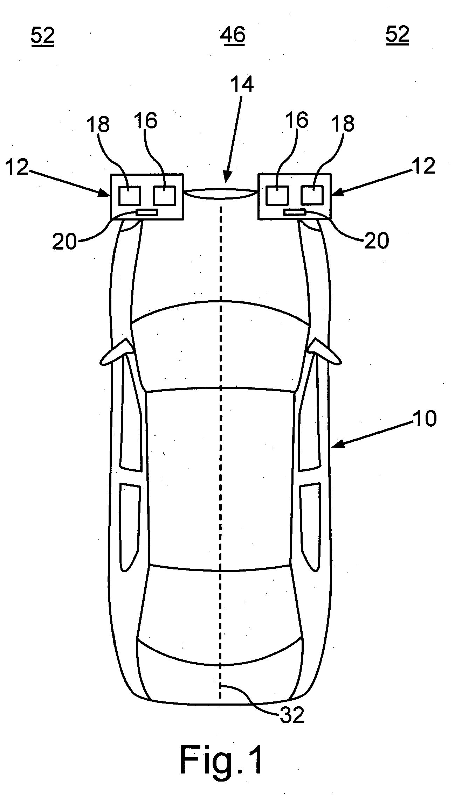

In Fig. 1 ist schematisch eine Draufsicht auf ein Kraftfahrzeug 10 mit einer Mehrzahl, beispielsweise zwei, Scheinwerfervorrichtungen 12 gemäß einer Ausführungsform der Erfindung dargestellt. Die Scheinwerfervorrichtung 12 ist im Ausführungsbeispiel an einer Front 14 des Kraftfahrzeugs 10 angebracht. Die Scheinwerfervorrichtung 12 kann jedoch auch an einer anderen Stelle des Kraftfahrzeugs 10 angeordnet sein.

Die Scheinwerfervorrichtung 12 umfasst eine Matrixscheinwerfereinheit 16 und eine Zusatzscheinwerfereinheit 18. Weiterhin umfasst die Scheinwerfervorrichtung 12 eine Steuereinheit 20 zum Bereitstellen von Steuersignalen.

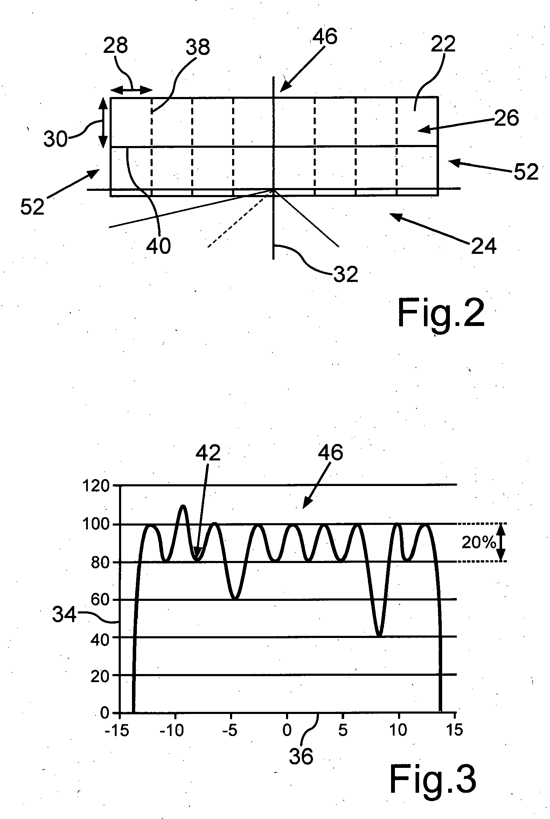

Fig. 2 zeigt Raumsegmente 22 eines Umgebungsbereichs 24 des Kraftfahrzeugs 10. Das Raumsegment 22 wird durch einen Lichtkegel 26 der Matrixscheinwerfereinheit 16 beleuchtet. Die Grenze des Raumsegments 22 kann beispielsweise so definiert sein, dass der jeweilige Lichtkegel 26 innerhalb der Grenze des Lichtkegels 80 Prozent seiner Leuchtkraft aufweist. Wird dieser vorbestimmte Wert, beispielsweise 80 Prozent, unterschritten, so befindet sich das beleuchtete Gebiet außerhalb des Raumsegments 22. Der Lichtkegel 26 weist in einer Ebene senkrecht zu einer Fahrzeuglängsachse 32 des Kraftfahrzeugs 10 eine Kegelabmessung auf. Die Kegelabmessung kann eine horizontale Abmessung 28 oder eine vertikale Abmessung 30 sein.

Fig. 3 zeigt ein Diagramm, welches eine Beleuchtungsstärke 34 in Abhängigkeit eines Horizontalwinkels 36 beziehungsweise eines Azimutwinkels zeigt. Die Beleuchtungsstärke 34 wird als Quotient aus dem auf eine Fläche auftreffenden Lichtstrom und der beleuchteten Fläche definiert. Die übliche Einheit der Beleuchtungsstärke ist das Lux. Der Horizontalwinkel 36 erstreckt sich parallel zu einer Fahrbahnebene des Kraftfahrzeugs 10. Die Angabe des Horizontalwinkels 36 kann beispielsweise so erfolgen, dass ausgehend von der Fahrzeuglängsachse 32 in Richtung des Uhrzeigersinns positive Werte des Horizontalwinkels 36 hochgezählt werden und analog dazu auf der anderen Seite der Fahrzeuglängsachse 32 die Werte des Horizontalwinkels 36 in negative Richtung des Zahlenstrahls gezählt werden. Der Graph in dem Diagramm von Fig. 3 zeigt also die Veränderung beziehungsweise die Variation der Beleuchtungsstärke 34 aufgrund der Mehrzahl von in diesem Fall horizontal benachbarten Lichtkegeln 26. Es kommt also beispielsweise zwischen benachbarten Lichtkegeln 26 beziehungsweise horizontalen Übergangsbereichen 38 (diese gilt ebenso für vertikale Übergangsbereiche 40) zu harten Gradienten 42 beziehungsweise einem relativ steilen beziehungsweise starken Abfall der Beleuchtungsstärke 34. Der harte Gradient 42 ist also ein Bereich in dem Diagramm, welcher durch ein Minimum dargestellt ist. Der Gradient wird als der harte Gradient 42 bezeichnet, falls die Beleuchtungsstärke 34 mehr als 10 Prozent zwischen einem Minimum, insbesondere einem lokalen Minimum, und einem Maximum, insbesondere einem lokalen Maximum, variiert. Das Diagramm in Fig. 3 beschreibt also von einem lokalen Minimum zum nächsten unmittelbar benachbarten lokalen Minimum die Beleuchtungsstärke 34 eines Lichtkegels 26.

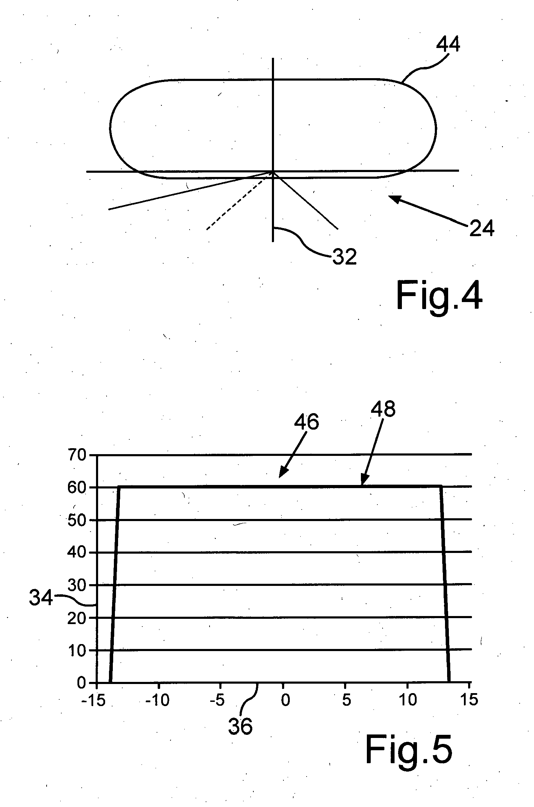

Fig. 4 zeigt nun einen Zusatzlichtkegel 44 der Zusatzscheinwerferreinheit 18. Der Zusatzlichtkegel 44 erstreckt sich in einen zentralen Frontalbereich 46, welcher symmetrisch zu der Fahrzeuglängsachse 32 angeordnet ist.

Fig. 5 zeigt ein Diagramm, welches die Beleuchtungsstärke 34 in Abhängigkeit des Horizontalwinkels 36 bezüglich des Ausführungsbeispiels gemäß Fig. 4 visualisiert. Es ist zu sehen, dass die Beleuchtungsstärke 34 im Wesentlichen keine Variation aufweist beziehungsweise dass die Beleuchtungsstärke 34 sich stets auf dem gleichen Niveau verhält. Es treten somit keine harten Gradienten 42 auf.

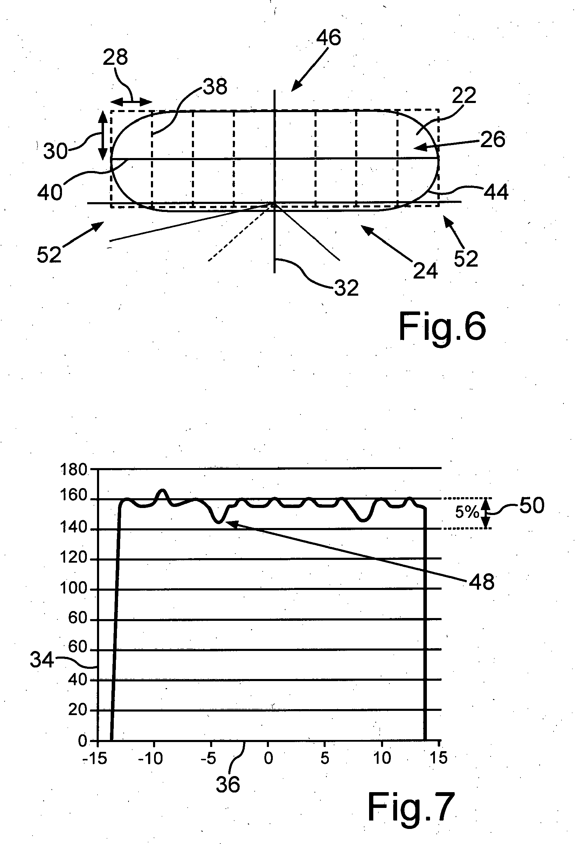

Fig. 6 zeigt nun mehrere der Lichtkegel 26, welche durch den Zusatzlichtkegel 44 überlagert sind. Die Lichtkegel 26 und der Zusatzlichtkegel 44 verhalten sich gemäß dem Ausführungsbeispiel symmetrisch zu der Fahrzeuglängsachse 32.

Fig. 7 zeigt ein Diagramm, in dem die Beleuchtungsstärke 34 abhängig von dem Horizontalwinkel 36 gemäß Fig. 6 dargestellt ist. Es ist zu sehen, dass keine harten Gradienten 42 vorhanden sind. Im Gegensatz zu den harten Gradienten 42 sind weiche Gradienten 48 vorhanden. Der Übergang der Beleuchtungsstärke 34 von einem Raumsegment 22 zu einem anderen Raumsegment 22 beziehungsweise von einem Lichtkegel 26 zu einem anderen Lichtkegel 26 wird als weicher Gradient 48 bezeichnet, falls die Beleuchtungsstärke 34 weniger als 10 Prozent, insbesondere 5 Prozent, variiert. Ein Unterschied bezüglich der Beleuchtungsstärke 34 von einem Raumsegment 22 zu einem anderen Raumsegment darf somit an keiner Stelle, insbesondere dem horizontalen Übergangsbereich oder dem vertikalen Übergangsbereich 40, mehr als 10 Prozent abweichen. Gemäß dem Ausführungsbeispiel von Fig. 7 ist die maximale Abweichung beziehungsweise der vorbestimmte prozentuale zweite Grenzwert 50 ≤ 5 Prozent.

Durch die Überlagerung der Lichtkegel 26 und der Zusatzlichtkegel 44 verschwinden für einen Fahrer des Kraftfahrzeugs 10 somit störende Inhomogenitäten, und dieser wird nicht mehr von dem Verkehrsgeschehen abgelenkt.

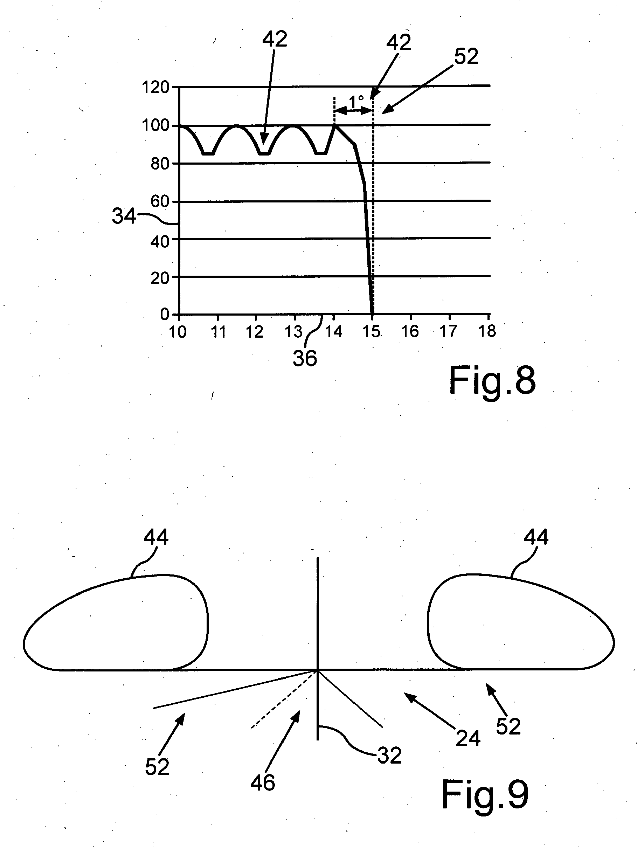

Fig. 8 zeigt ein Diagramm, in welchem die Beleuchtungsstärke 34 abhängig von dem Horizontalwinkel 36 visualisiert ist, für die Matrixscheinwerfereinheit 16 in aktivem Zustand und die Zusatzscheinwerfereinheit 18 in inaktivem Zustand, wobei der Fokus in dem Diagramm gemäß Fig. 8 auf einem der Raumsegmente 22 am seitlichen Rand 52 der Raumsegmente 22 gerichtet ist. In dem letzten horizontalen Raumsegment 22 fällt die Beleuchtungsstärke innerhalb von beispielsweise 1 Grad des Horizontalwinkels 36 steil ab. Durch diesen harten Gradienten 42 ergibt sich für den Fahrer ein harter Übergang von den beleuchteten Raumsegmenten 22 zu einem äußeren dunklen beziehungsweise nicht beleuchteten Bereich.

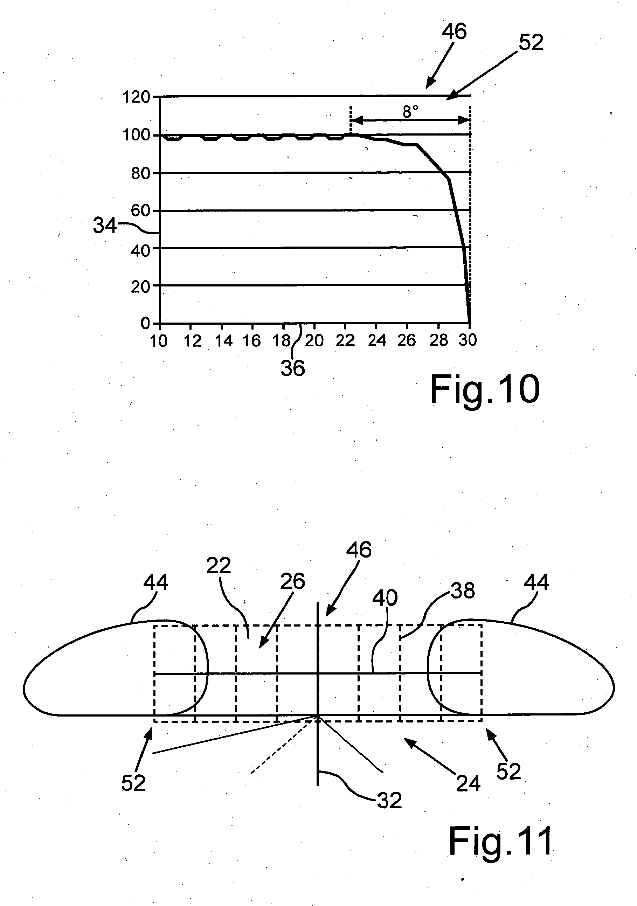

Fig. 9 zeigt gemäß einem Ausführungsbeispiel der Erfindung zwei der Zusatzlichtkegel 44, welche jeweils einen der seitlichen Ränder 52 beleuchten. Gemäß Fig. 9 sind die Zusatzlichtkegel 44 symmetrisch bezüglich der Fahrzeuglängsachse 32 angeordnet, dies muss aber nicht immer der Fall sein. Wird nun der Randbereich beziehungsweise der seitliche Rand 52 der Raumsegmente 22 durch die Lichtkegel 26 der Matrixscheinwerfereinheit 16 beleuchtet und zusätzlich durch die Zusatzlichtkegel 44 der Zusatzscheinwerfereinheit 18 - wie in Fig. 11 gezeigt -, so wird ein Verlauf der Beleuchtungsstärke 34 gemäß dem Diagramm in Fig. 10 erreicht. Das Diagramm in Fig. 10 zeigt also insbesondere, wie durch eine Überlagerung des seitlichen Randes 52 der Lichtkegel 26 der harte Gradient 42 an dem seitlichen Rand 52 vermieden werden kann. Der Abfall der Beleuchtungsstärke 34 ist also durch die Kombination von der Matrixscheinwerfereinheit 16 und der Zusatzscheinwerfereinheit 18 gemäß Fig. 11 weniger stark als dies der Fall ist bei Verwendung von ausschließlich der Matrixscheinwerfereinheit 16 alleine. Der Abfall der Beleuchtungsstärke 34 erstreckt sich gemäß Fig. 10 über einen Bereich von 8 Grad des Horizontalwinkels 36. Gemäß anderen Ausführungsformen der Erfindung, welche in den Zeichnungen nicht dargestellt sind, kann der Abfall der Beleuchtungsstärke 34 an dem seitlichen Rand 52 auch einen abweichenden Wert von 8 Grad des Horizontalwinkels 36 aufweisen, welcher jedoch stets größer als 1 Grad, wie in Fig. 8 gezeigt, ist.

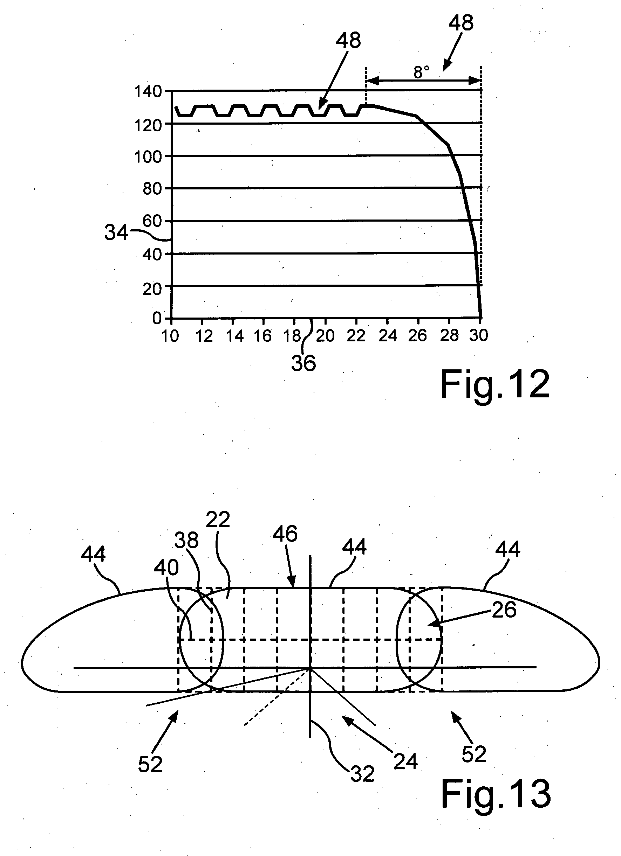

Fig. 12 zeigt nun ein Diagramm, welches die Beleuchtungsstärke 34 gemäß der in Fig. 11 dargestellten Kombination von der Matrixscheinwerfereinheit 16 und der Zusatzscheinwerfereinheit 18 visualisiert. Die Zusatzlichtkegel 44 sind auf den seitlichen Rand 52 der Raumsegmente 22 gerichtet. Es kommt dadurch, wie in dem Diagramm (Fig. 12) eingetragen, zu einem relativ flachen Abfall der Beleuchtungsstärke 34 an dem seitlichen Rand 52.

Fig. 13 zeigt eine weitere Ausführungsform der Erfindung, wobei die Lichtkegel 26 der Matrixscheinwerfereinheit 16 durch jeweils einen Zusatzlichtkegel 44 an den seitlichen Rand 52 ergänzt werden und einer der Zusatzlichtkegel 44 in den zentralen Frontbereich 46 abgestrahlt wird. Das Ausführungsbeispiel der erfindungsgemäßen Scheinwerfervorrichtung 12 gemäß Fig. 13 führt zu einem Verlauf der Beleuchtungsstärke 34, wie dies in Fig. 7 in Zusammenschau mit Fig. 12 gezeigt ist. In Fig. 7 ist der Fokus auf den zentralen Frontalbereich 46, und in Fig. 12 ist der Fokus auf den seitlichen Rand 52 der Raumsegmente 22 gerichtet.

Vorzugsweise ist die Scheinwerfervorrichtung 12 so ausgelegt, dass abhängig von einem Steuersignal der Steuereinheit 20 jeder der Lichtkegel 26 unabhängig von den anderen Lichtkegeln 26 zwischen einem aktiven Zustand und einem inaktiven Zustand gewechselt werden kann. So kann es vorzugsweise auch vorgesehen sein, dass, falls einer der Lichtkegel 26 in den inaktiven Zustand geschalten wird, als Folge daraus der in das gleiche Raumsegment 22 wie der dementsprechende Lichtkegel 26 abstrahlende Zusatzlichtkegel 44 ebenfalls in einen inaktiven Zustand durch ein Steuersignal der Steuereinheit 20 geschalten beziehungsweise versetzt wird. Insbesondere ist vorgesehen, dass sowohl der Lichtkegel 26 des jeweiligen Raumsegments 22 und der Zusatzlichtkegel 44 in den inaktiven Zustand gewechselt werden, falls in dem jeweiligen Raumsegment 22 ein anderer Verkehrsteilnehmer erkannt wird beziehungsweise zu erwarten ist.

Insgesamt zeigt das Beispiel, wie durch die Erfindung der Umgebungsbereich 24 besonders homogen ausgeleuchtet werden kann.

## Patentansprüche

1. Scheinwerfervorrichtung (12) für ein Kraftfahrzeug (10) mit einer Matrixscheinwerfereinheit (16), welche dazu ausgelegt ist, in unterschiedliche Raumsegmente (22) eines Umgebungsbereichs (24) des Kraftfahrzeuges (10) jeweils einen Lichtkegel (26) abzustrahlen und in Abhängigkeit von einem Steuersignal jeden der Lichtkegel (26) unabhängig von den anderen Lichtkegeln (26) zwischen einem aktiven Zustand und einem inaktiven Zustand zu wechseln, wobei jeder Lichtkegel (26) entlang einer vorbestimmten Richtung in einer Ebene senkrecht zur Fahrzeuglängsachse (32) eine jeweilige Kegelabmessung (28, 30) aufweist, wobei durch eine räumliche Anordnung der Lichtkegel (26) eine in der Ebene und entlang der Richtung gemessene Beleuchtungsstärke (34) der Matrixscheinwerfereinheit (16) eine vorbestimmte Welligkeit (42) aufweist, wobei die Scheinwerfervorrichtung (12) eine Zusatzscheinwerfereinheit (18) umfasst, welche dazu ausgelegt ist, drei Zusatzlichtkegel (44) mit zumindest einer in derselben Richtung und derselben Ebene wie die Kegelabmessung (28, 30) gemessenen, doppelten Kegelabmessung abzustrahlen, so dass eine Gesamtwelligkeit (48) der Beleuchtungsstärke (34) der Scheinwerfervorrichtung (12) kleiner als die Welligkeit (42), welche ausschließlich durch die Matrixscheinwerfereinheit (16) auftritt, ist, wobei die Beleuchtungsstärke (34) der Scheinwerfervorrichtung (12) durch die Kombination der Matrixscheinwerfereinheit (16) und der Zusatzscheinwerfereinheit (18) in jedem der Raumsegmente (22) unter einem jeweils vorbestimmten ersten Grenzwert liegt, wobei die Zusatzscheinwerfereinheit (18) dazu ausgelegt ist, falls zumindest einer der Lichtkegel (26) der Matrixscheinwerfereinheit (16) in dem inaktiven Zustand ist, den in das gleiche Raumsegment (22) wie der dementsprechende Lichtkegel (26) abstrahlenden Zusatzlichtkegel (44) durch ein Steuersignal der Steuereinheit (20) ebenfalls in einen inaktiven Zustand zu wechseln, und wobei die Zusatzscheinwerfereinheit (18) dazu ausgelegt ist, einen der drei Zusatzlichtkegel (44) zumindest teilweise in die Raumsegmente (22) abzustrahlen, welche in einem zentralen, die Fahrzeuglängsachse (32) umfassenden Frontalbereich (46) symmetrisch zu der Fahrzeuglängsachse (32) angeordnet sind, und wobei die Zusatzscheinwerfereinheit (18) dazu ausgelegt ist, die zwei übrigen der drei Zusatzlichtkegel (44) zumindest teilweise auf ein jeweiliges am seitlichen Rand (52) der Raumsegmente (22) angeordnetes Raumsegment abzustrahlen, wobei ein Abfall der Beleuchtungsstärke (34) durch die Kombination der Matrixscheinwerfereinheit (16) und der Zusatzscheinwerfereinheit (18) weniger stark ist als dies der Fall ist bei Verwendung ausschließlich der Matrixscheinwerfereinheit (16) alleine,
**dadurch gekennzeichnet, dass**
die Beleuchtungsstärke (34) der Scheinwerfervorrichtung (12) durch die Kombination der Matrixscheinwerfereinheit (16) und der Zusatzscheinwerfereinheit (18) in jedem der von den Zusatzlichtkegeln (44) erfassten Raumsegmente (22) weniger als ein vorbestimmter prozentualer zweiter Grenzwert (50) variiert.

2. Scheinwerfervorrichtung (12) nach Anspruch 1,
**gekennzeichnet dadurch, dass**
die Zusatzscheinwerfereinheit (18) dazu ausgelegt ist, mit dem beleuchtungsstärksten Bereich des jeweiligen Zusatzlichtkegels (44) in einen vertikalen Übergangsbereich (40) und/oder einen horizontalen Übergangsbereich (38) zwischen den Lichtkegeln (26) der Matrixscheinwerfereinheit (16) abzustrahlen.

3. Scheinwerfervorrichtung (12) nach einem der vorhergehenden Ansprüche,
**gekennzeichnet dadurch, dass**
die Zusatzscheinwerfereinheit (18) dazu ausgelegt ist, zwei der drei Zusatzlichtkegel (44) zumindest teilweise auf am seitlichen Rand (52) der Raumsegmente (22) angeordnete Raumsegmente 10 Grad, 15 Grad oder 20 Grad bezüglich der Fahrzeuglängsachse (32) in horizontaler Richtung abzustrahlen.

4. Scheinwerfervorrichtung (12) nach einem der vorhergehenden Ansprüche,
**gekennzeichnet dadurch, dass**
eine Lichtquelle der Zusatzscheinwerfereinheit (18) als eine Halogenlampe und/oder eine Xenon-Gasentladungslampe und/oder eine Leuchtdiode und/oder ein Laser ausgebildet ist.

5. Scheinwerfervorrichtung (12) nach einem der vorhergehenden Ansprüche,
**gekennzeichnet dadurch, dass**
die Beleuchtungsstärke (34) der Scheinwerfervorrichtung (12) durch die Kombination der Matrixscheinwerfereinheit (16) und der Zusatzscheinwerfereinheit (18) in jedem der von den Zusatzlichtkegeln (44) erfassten Raumsegmente (22) weniger als 10 Prozent oder 5 Prozent oder 4 Prozent bis 2 Prozent oder 1 Prozent variiert.

6. Kraftfahrzeug (10) mit mindestens einer Scheinwerfervorrichtung (12) nach einem der vorhergehenden Ansprüche.

## Claims

1. Headlamp device (12) for a motor vehicle (10) having a matrix headlamp unit (16) which is designed to radiate in each case one light cone (26) into different space segments (22) of a surrounding area (24) of the motor vehicle (10) and depending on a control signal to switch each of the light cones (26) independently of the other light cones (26) between an active state and an inactive state, wherein each light cone (26) has a respective cone dimension (28, 30) along a predetermined direction in a plane perpendicular to the vehicle longitudinal axis (32), wherein by means of a spatial arrangement of the light cones (26) a lighting intensity (34) of the matrix headlamp unit (16), measured in the plane and along the direction, has a predetermined undulation (42), wherein the headlamp device (12) comprises an additional headlamp unit (18) which is designed to radiate three additional light cones (44) having at least one doubled cone dimension, measured in the same direction and the same plane as the cone dimension (28, 30), such that a total undulation (48) of the lighting intensity (34) of the headlamp device (12) is smaller than the undulation (42) which occurs exclusively by means of the matrix headlamp unit (16), wherein the lighting intensity (34) of the headlamp device (12) by means of the combination of the matrix headlamp unit (16) and the additional headlamp unit (18) lies in each of the space segments (22) below a respectively predetermined first threshold value, wherein the additional headlamp unit (18) is designed, in the case that at least one of the light cones (26) of the matrix headlamp unit (16) is in the inactive state, to switch the additional light cone (44) radiating into the same space segment (22) as the corresponding light cone (26) by means of a control signal of the control unit (20) also into an inactive state, and wherein the additional headlamp unit (18) is designed to radiate one of the three additional light cones (44) at least partially into the space segments (22) which are arranged in a central frontal region (46) comprising the vehicle longitudinal axis (32), symmetrically to the vehicle longitudinal axis (32), and wherein the additional headlamp unit (18) is designed to radiate the two remaining of the three additional light cones (44) at least partially onto a respective space segment disposed at the lateral edge (52) of the space segments (22), wherein a drop in the lighting intensity (34) by means of the combination of the matrix headlamp unit (16) and the additional headlamp unit (18) is less strong than is the case in the exclusive use of the matrix headlamp unit (16) alone,
**characterised in that**
the lighting intensity (34) of the headlamp device (12) by means of the combination of the matrix headlamp unit (16) and the additional headlamp unit (18) varies in each of the space segments (22) covered by the additional light cones (44) by less than a predetermined percentage-wise second threshold value (50).

2. Headlamp device (12) according to claim 1,
**characterised in that**
the additional headlamp unit (18) is designed to radiate with the most intensively lit portion of the respective additional light cone (44) into a vertical transition area (40) and/or a horizontal transition area (38) between the light cones (26) of the matrix headlamp unit (16).

3. Headlamp device (12) according to any of the preceding claims,
**characterised in that**
the additional headlamp unit (18) is designed to radiate two of the three additional light cones (44) at least partially onto space segments disposed on the lateral edge (52) of the space segments (22) 10 degrees, 15 degrees or 20 degrees with respect to the vehicle longitudinal axis (32) in horizontal direction.

4. Headlamp device (12) according to any of the preceding claims,
**characterised in that**
a light source of the additional headlamp unit (18) is in the form of a halogen lamp and/or a xenon gas discharge lamp and/or a light diode and/or a laser.

5. Headlamp device (12) according to any of the preceding claims,
**characterised in that**
the lighting intensity (34) of the headlamp device (12) by means of the combination of the matrix headlamp unit (16) and the additional headlamp unit (18) varies in each of the space segments (22) covered by the additional light cones (44) by less than 10 percent or 5 percent or 4 percent up to 2 percent or 1 percent.

6. Motor vehicle (10) having at least one headlamp device (12) according to any of the preceding claims.

## Revendications

1. Dispositif formant phare (12) pour un véhicule automobile (10) avec un bloc de phare matriciel (16), lequel est conçu pour rayonner un cône de lumière (26) respectivement dans différents segments spatiaux (22) d'une zone environnante (24) du véhicule automobile (10) et commuter entre un état actif et un état inactif en fonction d'un signal de commande de chacun des cônes de lumière (26) indépendamment des autres cônes de lumière (26), dans lequel chaque cône de lumière (26) présente une dimension de cône (28, 30) respective le long d'une direction prédéterminée dans un plan perpendiculaire à l'axe longitudinal de véhicule (32), dans lequel, par un agencement spatial des cônes de lumière (26), une intensité d'éclairage (34) mesurée dans le plan et le long de la direction du bloc de phare matriciel (16) présente une ondulation prédéterminée (42),
dans lequel le dispositif formant phare (12) comprend un bloc de phare supplémentaire (18), lequel est conçu pour rayonner trois cônes de lumière supplémentaires (44) avec au moins une dimension de cône doublée, mesurée dans la même direction et dans le même plan que la dimension de cône (28, 30), de telle sorte qu'une ondulation globale (48) de l'intensité d'éclairage (34) du dispositif formant phare (12) est inférieure à l'ondulation (42), qui se produit exclusivement via le bloc de phare matriciel (16), dans lequel l'intensité d'éclairage (34) du dispositif formant phare (12), par la combinaison du bloc de phare matriciel (16) et du bloc de phare supplémentaire (18) dans chacun des segments spatiaux (22), est inférieure à une première valeur de seuil prédéterminée respective,
dans lequel le bloc de phare supplémentaire (18) est conçu de telle sorte que dans le cas où au moins l'un des cônes de lumière (26) du bloc de phare matriciel (16) est à l'état inactif, le cône de lumière supplémentaire (44) rayonnant dans le même segment spatial (22) que le cône de lumière correspondant (26) peut, via un signal de commande de l'unité de commande (20), également commuter vers un état inactif, et dans lequel le bloc de phare supplémentaire (18) est conçu pour rayonner l'un des trois cônes de lumière supplémentaires (44) au moins partiellement dans les segments spatiaux (22), qui sont agencés symétriquement par rapport à l'axe longitudinal de véhicule (32) dans une zone avant centrale (46) comprenant l'axe longitudinal de véhicule (32), et dans lequel le bloc de phare supplémentaire (18) est conçu pour rayonner les deux restants parmi les trois cônes de lumière supplémentaires (44) au moins partiellement sur un segment spatial respectif agencé au niveau d'un bord latéral (52) des segments spatiaux (22), dans lequel une diminution de l'intensité d'éclairage (34), par la combinaison du bloc de phare matriciel (16) et du bloc de phare supplémentaire (18), est moins forte que celle dans le cas de la seule utilisation exclusive du bloc de phare matriciel (16),
**caractérisé en ce que**
l'intensité d'éclairage (34) du dispositif formant phare (12), par la combinaison du bloc de phare matriciel (16) et du bloc de phare supplémentaire (18) dans chacun des segments spatiaux (22) détectés à partir de cônes de lumière supplémentaires (44), varie moins qu'une seconde valeur de seuil en pourcentage (50) prédéterminée.

2. Dispositif formant phare (12) selon la revendication 1,
**caractérisé en ce que**
le bloc de phare supplémentaire (18) est conçu pour rayonner avec la région d'intensité d'éclairage la plus élevée du cône de lumière supplémentaire respectif (44) dans une région de transition verticale (40) et/ou une région de transition horizontale (38) entre les cônes de lumière (26) du bloc de phare matriciel (16).

3. Dispositif formant phare (12) selon l'une quelconque des revendications précédentes,
**caractérisé en ce que**
le bloc de phare supplémentaire (18) est conçu pour rayonner deux des trois cônes de lumière supplémentaires (44) au moins partiellement sur des segments spatiaux agencés au niveau du bord latéral (52) des segments spatiaux (22) dans la direction horizontale à 10 degrés, 15 degrés ou 20 degrés par rapport à l'axe longitudinal de véhicule (32).

4. Dispositif formant phare (12) selon l'une quelconque des revendications précédentes,
**caractérisé en ce que**
une source de lumière du bloc de phare supplémentaire (18) est réalisée sous la forme d'une lampe à halogène et/ou d'une lampe à décharge de xénon et/ou d'une diode électroluminescente et/ou d'un laser.

5. Dispositif formant phare (12) selon l'une quelconque des revendications précédentes,
**caractérisé en ce que**
l'intensité d'éclairage (34) du dispositif formant phare (12), par la combinaison du bloc de phare matriciel (16) et du bloc de phare supplémentaire (18), dans chacun des segments spatiaux (22) détectés à partir des cônes de lumière supplémentaires (44), varie de moins de 10 pour cent ou 5 pour cent ou 4 pour cent à 2 pour cent ou 1 pour cent.

6. Véhicule automobile (10) ayant au moins un dispositif formant phare (12) selon l'une quelconque des revendications précédentes.
